# EUROPÄISCHE PATENTANMELDUNG

(11) **EP 1 517 212 A2**
(43) Veröffentlichungstag der Anmeldung: **23.03.2005**
(21) Anmeldenummer: 04022615.1
(22) Anmeldetag: 22.09.2004
(51) Int. Cl.: G05D 7/00, G05D 16/20

(54) **Gasentnahmeeinrichtung insbesondere für hochreine Gase sowie dazu geeignetes Proportionalventil**

(30) Priorität: 22.09.2003 DE 20314772 U
(71) Anmelder: GCE-DruVa GmbH & Co. KG, 69214 Eppelheim (DE)
(72) Erfinder: Greifzu, Manfred, 36137 Grossenlüder (DE); Görde, Werner, 36039 Fulda (DE); Schlander, Jan H., 76131 Karlsruhe (DE)
(74) Vertreter: Schubert, Siegmar, Dipl.-Ing.

(57) **Zusammenfassung**

Bei einer Gasentnahmeeinrichtung insbesondere für hochreine Gase, mit einem Entnahmeregler, mit dem der Druck und/oder Durchfluß des Gases in einer Entnahmeleitung regelbar ist, sollen die Funktionalität und Genauigkeit bei geringem gerätetechnischen Aufwand verbessert werden. Hierzu weist der Regler ein elektromechanisches Stellglied (3) in der Entnahmeleitung (1, 2), einen elektrischen Sensor (6) in der Entnahmeleitung sowie einen elektronischen Regler (4) auf, über den das Stellglied (3) mit dem Sensor (6) in einer Regelschleife in elektrischer Verbindung steht. Das Stellglied ist vorzugsweise ein elektromagnetisch oder piezoelektrisch betätigtes Proportionalventil, dessen Ventilkammer von seinem Aktuatorbereich durch eine gasundurchlässige Membrane getrennt ist.

## Beschreibung

Die Erfindung betrifft eine Gasentnahmeeinrichtung insbesondere für hochreine Gase nach dem Oberbegriff des Anspruchs 1.

Ein speziellerer Aspekt der Erfindung betrifft ein Proportionsventil zum Einsatz in einer Entnahmeleitung für hochreine Gase, welches wesentlicher Bestandteil der obigen Gasentnahmeeinrichtung sein kann.

In Labors oder Techniken für Forschung, Entwicklung und Industrie werden für verschiedene Anwendungen technische, reine und hochreine Gase - bei einer Gasreinheit bis zu 6.0 - unter definiertem konstantem Druck benötigt. Um diese sicher an den Entnahmestellen zur Verfügung zu stellen, ohne die Reinheit der Gase zu beeinträchtigen, gehören spezielle Reinstgas-Entnahmedruckregler zum Stand der Technik. Diese bekannten Reinstgas-Entnahmedruckregler sind als vollständig mechanische Systeme ausgeführt und für die angestrebte Genauigkeit der Druckregelung gerätetechnisch aufwendig.

Der vorliegenden Erfindung liegt die Aufgabe zugrunde, eine Gasentnahmeeinrichtung insbesondere für hochreine Gase mit einem Entnahmeregler zu schaffen, der die physikalisch technischen Anforderungen an die Entnahmeregelung mindestens in dem gleichen Maße wie die bisherigen mechanischen Entnahmedruckregler erfüllt, die darüber hinaus flexibel auch für eine Durchflußregelung modifiziert werden kann und welche die Funktionalität und Genauigkeit bei geringem gerätetechnischen Aufwand verbessert.

Dementsprechend ist insbesondere ein verbessertes Proportionalventil zu schaffen.

Unter hochreinen Gasen, die mit einer solchen Gasentnahmeeinrichtung abgegeben werden können, werden solche mit Gasreinheiten zwischen 4 und 6 verstanden.

Die obige Aufgabe wird durch eine Gasentnahmeeinrichtung insbesondere für hochreine Gase mit einem Entnahmeregler gelöst, welche die in dem kennzeichnenden Teil des Anspruchs 1 angegebenen Merkmale aufweist.

Es handelt sich somit um einen mechatronischen Druckregler, zu dem mehrere Komponenten, insbesondere ein elektromechanisches Stellglied in einer Entnahmeleitung, ein elektrischer Sensor in der Entnahmeleitung stromaufwärts oder stromabwärts des Stellglieds sowie der eigentliche elektronische Regler, in dem ein Ist-/Sollwertvergleich durchgeführt wird und ein Strom- oder Spannungssignal der erforderlichen Leistung zur Betätigung des Stellglieds erzeugt wird, gehören. Das elektromechanische Stellglied, der elektronische Regler und der elektrische Sensor stehen dabei eine Regelschleife bildend in elektrischer Verbindung.

Hierbei ist das elektromechanische Stellglied ein Proportionalventil mit einer praktisch reibungslosen Führung, die im Betrieb wenig Abrieb hervorruft und damit zur Reinhaltung des Gases besonders geeignet ist. Gleichwohl kann das Proportionalventil unkompliziert ausgebildet sein. Je nach Wahl des Sensors und Modifikation bzw. Einstellung des elektronischen Reglers kann die Gasentnahmeeinrichtung an die jeweiligen Erfordernisse einfach und mit einem geringen gerätetechnischen Aufwand angepaßt werden.

Weiter vorteilhafte Merkmale der Gasentnahmeeinrichtung gehen aus den Unteransprüchen 2 bis 9 hervor.

Insbesondere kann je nach Wahl des eingesetzten Sensors in Form eines Drucksensors oder eines Durchflußsensors der Entnahmedruck oder der Entnahmedurchfluß an der Entnahmestelle, in welche die Entnahmeleitung mündet, geregelt werden. Hierzu kann das selbe elektromechanische Stellglied Verwendung finden. Die Herstellung und Lagerhaltung von Gasentnahmeeinrichtungen mit Entnahmeregler, welche die verschiedenen Anforderungen erfüllen, kann daher einfach und rationell gehalten werden. Dies ist auch darauf zurückzuführen, daß für hohe Gasreinheit standardisierte Drucksensoren oder Durchflußsensoren eingesetzt werden können.

Das Stellglied ist insbesondere nach Anspruch 4 ein piezoelektrisch betätigtes Proportionalventil, dessen Ventilsitzquerschnitt sich proportional zur angelegten Spannung öffnet, die von einem Ausgang des Reglers abgegeben wird. - Statt dessen kann das Stellglied auch als elektromagnetisch betätigtes Proportionalventil ausgeführt sein, dessen Ventilsitzquerschnitt sich proportional zu einem Strom, der von einem Ausgang des elektronischen Reglers abgegeben wird, öffnet. In beiden Fällen kann die Ventilsitzöffnung über eine Hubbewegung oder eine Wippbewegung erfolgen. Im Fall des elektromagnetisch betätigten Proportionalventils kann die Ventilsitzöffnung über einen größeren Weg erfolgen.

Besonders vorteilhaft, da wirksam und technisch wenig aufwendig, ist gemäß Anspruch 6 eine Ventilkammer des Proportionalventils von einem Aktuatorbereich des Proportionalventils, insbesondere von einem praktisch reibungslos geführten Ventilschaft durch eine gasundurchlässige Membrane getrennt, die Verunreinigungen von dem Reinstgas fernhält. Die Ventilkammer ist somit der Reinstgasraum bzw. ein Teil eines solchen Reinstgasraums. Zu dem Aktuatorbereich gehört der Ventilschaft, der ein Schließteil in der Ventilkammer des Proportionalventils mit einem Anker eines Elektromagneten oder einem Piezoelement außerhalb der Ventilkammer verbindet.

Gemäß Anspruch 7 kann statt obiger Proportionalventile ein Zweistellungsventil verwendet werden, welches nur zwischen einer geschlossenen Stellung und einer maximalen Stellung verstellt werden kann. Die Einstellung eines mittleren Drucks oder Durchflusses erfolgt hierbei entsprechend der relativen Ventilöffnungszeit, die durch eine von dem Regler abgegebene impulsförmige Stellgröße bestimmt wird. Die Ventilsitzöffnung kann durch eine Hubbewegung oder eine Wippbewegung erfolgen.

Funktionell wichtiger Bestandteil der Regelschleife ist der hier eingesetzte elektronische Regler, der aus elektrischen Standardeinheiten der Meß- und Regeltechnik bestehen kann. In dem elektronischen Regler wird der Vergleich zwischen Sollwert und Istwert durchgeführt und entsprechend der damit gebildeten Regelabweichung eine Stellgröße gebildet, welche als elektrische Größe in das Stellglied eingespeist wird, um dieses zum Öffnen oder Schließen eines Ventilsitzes zu betätigen.

Zu dem Regler gehört zweckmäßig ein Display als Anzeigeeinrichtung zur Darstellung des Sollwertes und des Istwertes. Die Anzeige eine Sollwerts oder Istwerts auf dem Display kann gewechselt werden. Mit dem Display verbunden ist eine Bedieneinrichtung mit Tast- oder Drehschalter, mit der der Sollwert eingegeben werden kann.

In einer besonders vorteilhaften Option nach Anspruch 8 können mehrere Regler, von denen einer einer Entnahmeleitung einer Gasart zugeordnet ist, mit einer gemeinsamen Anzeige- und Bedieneinrichtung, welche Anzeige- und Bedienorgane sowie eine Umschalteinrichtung umfaßt, in Verbindung stehen. Mit der Umschalteinrichtung ist zumindest ein Teil der Anzeige- und Bedienorgane auf einen Regler umschaltbar. Damit können die Anzeigeorgane - vorteilhaft in Form eines Display - und die Bedienungseinrichtung für die Regelung verschiedener Gase mehrfach genutzt werden.

Das zur Entnahme des Reinstgases aus der Entnahmeleitung besonders geeignete, das Reinstgas vor Verunreinigungen schützende Proportionalventil nach wenigstens einem der Ansprüche 10 bis 15 bedarf zu seinem betriebsmäßigen Einsatz nicht unbedingt einer speziellen Regelanordnung, sondern nur einer Steuerung mit einem Einsteller. Die vorteilhaften Wirkungen des Proportionalventils nach Anspruch 10 ergeben sich aber auch aus der obigen Beschreibung zu Anspruch 6. Die Aktuatorvarianten gemäß den Ansprüchen 14 und 15 entsprechen denen der Ansprüche 4 und 5.

Fertigungstechnisch günstig realisierbare Einzelheiten der Proportionalventile sind in den Ansprüchen 11 bis 13 angegeben. Diese Proportionalventile können auch in den Gasentnahmeeinrichtungen nach den Ansprüchen 1, 2, 3, 8 und 9 eingesetzt werden.

Ausführungsbeispiele der Erfindung werden im folgenden anhand einer Zeichnung mit drei Figuren erläutert, aus denen sich weitere Konkretisierungen der Erfindung ergeben können. Es zeigen:
- Fig. 1: eine schematische Darstellung eines Regelkreises einer Gasentnahmeeinrichtung für hochreine Gase, in der der Druck bzw. Durchfluß des Gases in einen einem Regelventil nachgeschalteten Abschnitt einer Entnahmeleitung geregelt wird,
- Fig. 2: einen geschlossenen Regelkreis entsprechend Fig. 1, in dem jedoch der Druck bzw. Durchfluß des Gases in den dem Regelventil vorgeschalteten Abschnitt der Entnahmeleitung geregelt wird, und
- Fig. 3: einen Längsschnitt durch einen MembranMagnetventilabschnitt eines elektromagnetisch betätigten Proportionalventils.

In die aus den Abschnitten 1 und 2 bestehende Entnahmeleitung ist ein als praktisch reibungsfrei geführtes Proportionalventil ausgebildetes Stellglied 3 eingefügt. Unter einem solchen Proportionalventil wird ein Proportionalventil mit einer Führung verstanden, die berührungslos bzw. zumindest berührungsarm ist.

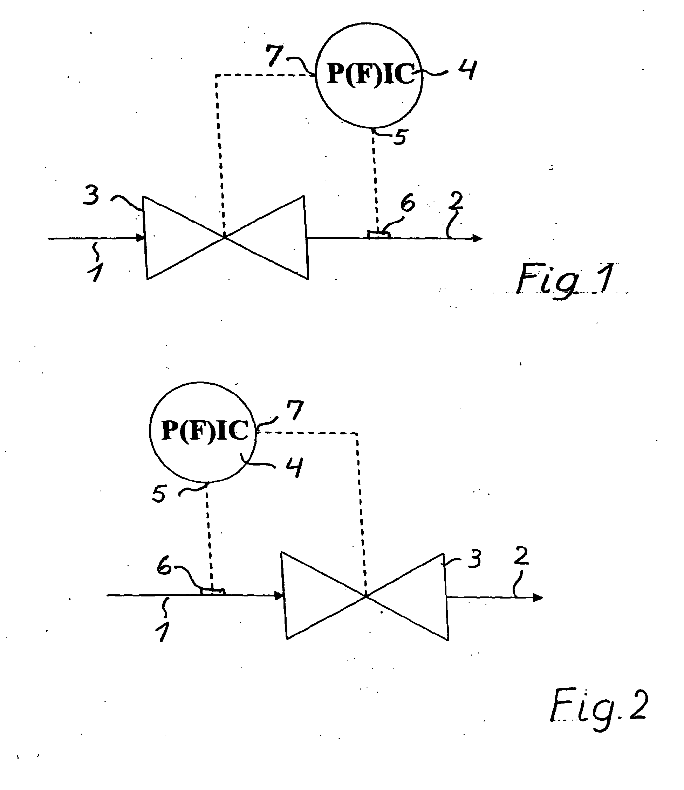

Ein elektronischer Regler mit eine nicht dargestellten Anzeige- und Bedieneinrichtung ist mit 4 bezeichnet. Ein Istwerteingang 5 des Reglers ist elektrisch mit einem Sensor 6 verbunden, der gemäß Fig. 1 in dem ausgangsseitigen Abschnitt 2 der Entnahmeleitung angeordnet ist. Zur Darstellung des Sollwerts des Drucks oder des Durchflusses dient ein Einsteller bzw. ein Einstellorgan der nicht gezeigten Anzeige- und Bedieneinrichtung. - Ein elektrischer Ausgang 7 des elektronischen Reglers 4 steht mit dem Stellglied 3 in Verbindung, um diesen mit einer Spannung bzw. einem Strom entsprechend der Stellgröße zu speisen.

Der Druck bzw. der Durchfluß an einer Entnahmestelle, zu der der Abschnitt 2 der Entnahmeleitung führt, wird je nach Wahl des Sensors 6 als Drucksensor oder Durchflußsensor geregelt. Er wird auf einen Betrag entsprechend dem an dem Regler 4 eingestellten Sollwert eingeregelt, indem der Regler an seinem Ausgang 7 eine so große Stellgröße abgibt, daß durch Verstellung des Stellglieds 3 sich der gewünschte Druckwert bzw. Durchflußwert als Istwert in dem Abschnitt 2 selbsttätig einstellt, weitgehend unabhängig von dem Druck in dem Abschnitt 1 der Entnahmeleitung und anderen Störgrößen.

Die Ausführungsform gemäß Fig. 2 unterscheidet sich von derjenigen in Fig. 1 unter Beibehaltung der Bezugszeichen im wesentlichen nur dadurch, daß der Sensor 6 in dem Abschnitt 1 der Entnahmeleitung stromaufwärts des Stellglieds angeordnet ist und dort den Istwert erfaßt, der durch Einstellung des Stellglieds 3 geregelt wird. - Hierzu können der gleiche Sensor, der gleiche Regler 4 und das gleiche Stellglied 3 verwendet werden wie im Fall der Fig. 1. In beiden Fällen werden die Nachteile der physikalisch technischen Eigenschaften rein mechanischer Entnahmeregler eliminiert und die Regel- und Einstellgenauigkeit verbessert. In der Ausführungsform gemäß Fig. 1 ist die Einstellgenauigkeit des Drucks an der Entnahmestelle besonders genau. In der Ausführungsform gemäß Fig. 2 wird die Auswirkung von Störgrößen stromaufwärts des Stellglieds 3 besonders rasch geregelt.

In den Figuren 1 und 2 steht die Abkürzung P(F)IC mit PIC für Druckmessung und -regelung (Pressure Indicator Control) bzw. mit FIC für Durchflußmessung und -regelung (Flow Indicator Control), die beide möglich sind.

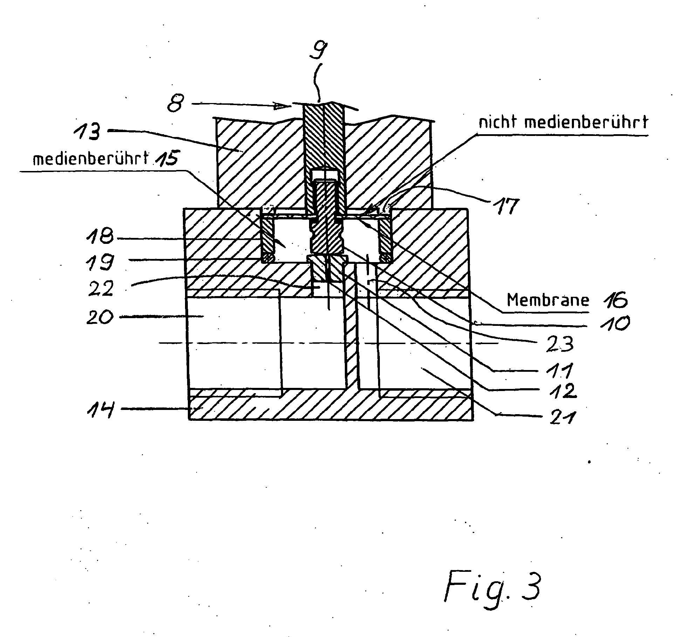

In Figur 3 ist ein wesentlicher Membrane-Magnetventilabschnitt dargestellt, der zu einem elektromagnetisch betätigten Proportionalventil gehört.

Als Aktuator, der allgemein mit 8 bezeichnet ist, ist ein Elektromagnet mit einem Anker vorgesehen, der mit einem Ventilschaft 9 in Verbindung steht. In den Ventilschaft ist unten ein Schließteil 10 eingeschraubt, welches auch als Schieber bezeichnet werden kann. Das Schließteil ist durch den Aktuator 8 gegenüber einem Ventilsitz 11 verstellbar und verschließt in einer untersten Stellung eine Bohrung 12 in dem Ventilsitz. Der Ventilschaft 9 ist in einem oberen Ventilkörper 13 reibungsarm verschiebbar gelagert, der auf einem unteren Ventilkörper 14 sitzt.

Das Schließteil 10 und der Ventilsitz 11 befinden sich in einer Ventilkammer 15, die aus dem unteren Ventilkörper 14 ausgeformt ist und oben bei dem oberen Ventilkörper 13 geschlossen ist. Zur oberen Abdichtung der Ventilkammer 15 dient eine gasundurchlässige Membrane 16, deren äußerer Randbereich zwischen einem ringförmigen Ansatz 17, der unten aus dem oberen Ventilkörper 13 ausgeformt ist, und einer Hülse 18 in der Ventilkammer 15 gepreßt ist. Die Hülse 18 liegt auf einem O-Ring 19 auf, der die Ventilkammer 15 unten nach außen abdichtet und einen über den Randbereich der Membrane gleichmäßigen Anpreßdruck gewährleistet. Der Ventilschaft 9 und dessen Führung sind durch die gasundurchlässige Membrane 16 wirksam gegen die Ventilkammer 15 abgedichtet, indem ein Randbereich um ein zentrales Loch in der Membrane zwischen dem Ventilschaft 9 und dem Schließteil 10 eingeklemmt ist.

Der untere Ventilkörper 14 umfaßt eine Einlaßöffnung 21 für das Reinstgas und eine Auslaßöffnung 20, jeweils mit einem nicht bezeichneten Gewinde. Eine erste Querbohrung 22 verbindet die Auslaßöffnung 20 mit der Unterseite des Ventilsitzes 11. Eine zweite Querbohrung 23 stellt eine Verbindung zwischen der Ventilkammer 15 und der Einlaßöffnung 21 her.

Zur Reinstgasentnahme wird der Ventilschaft 9 durch den Aktuator so hochgefahren, daß sich der gewünschte Durchfluß bzw. Druck in der Auslaßöffnung 20 einstellt, wobei das Reinstgas von der Einlaßöffnung 21 über die zweite Querbohrung 23 in die Ventilkammer 15 strömt und aus dieser durch die Bohrung 12 in dem Ventilsitz 11 und durch die erste Querbohrung 22 in die Auslaßöffnung 20 strömt. Dabei hält die gasundurchlässige Membrane 16 den Bereich um den Ventilschaft 9 zuverlässig von der Ventilkammer 15 getrennt. Die Membrane 16 ist bei der bevorzugten zylindrischen Form der Ventilkammer 15 rund; es sind jedoch auch andere Formen der Membrane in Anpassung an die Ventilkammerform möglich.

### Bezugszeichenliste

- 1: Abschnitt der Entnahmeleitung
- 2: Abschnitt der Entnahmeleitung
- 3: Stellglied (Proportionalventil)
- 4: elektronischer Regler
- 5: Istwerteingang
- 6: Sensor
- 7: Ausgang
- 8: Aktuator
- 9: Ventilschaft
- 10: Schließteil
- 11: Ventilsitz
- 12: Bohrung
- 13: oberer Ventilkörper
- 14: unterer Ventilkörper
- 15: Ventilkammer
- 16: gasundurchlässige Membrane
- 17: ringförmiger Ansatz
- 18: Hülse
- 19: O-Ring
- 20: Auslaßöffnung
- 21: Einlaßöffnung
- 22: 1. Querbohrung
- 23: 2. Querbohrung

## Patentansprüche

1. Gasentnahmeeinrichtung insbesondere für hochreine Gase, mit einem Entnahmeregler, mit dem der Druck und/oder Durchfluß des Gases in einer Entnahmeleitung regelbar ist,
**dadurch gekennzeichnet,**
**daß** der Regler ein elektromechanisches Stellglied (3) in der Entnahmeleitung (1, 2), einen elektrischen Sensor (6) in der Entnahmeleitung sowie einen elektronischen Regler (4) aufweist, über den das Stellglied (3) mit dem Sensor (6) in einer Regelschleife in elektrischer Verbindung steht.

2. Gasentnahmeeinrichtung nach Anspruch 1,
**dadurch gekennzeichnet,**
**daß** der Sensor (6) ein Drucksensor ist.

3. Gasentnahmeeinrichtung nach Anspruch 1,
**gekennzeichnet durch**
einen Durchflußsensor als Sensor (6).

4. Gasentnahmeeinrichtung nach wenigstens einem der vorangehenden Ansprüche,
**dadurch gekennzeichnet,**
**daß** das Stellglied (3) ein piezoelektrisch betätigtes Proportionalventil ist.

5. Gasentnahmeeinrichtung nach wenigstens einem der Ansprüche 1 bis 3,
**dadurch gekennzeichnet,**
**daß** das Stellglied (3) ein elektromagnetisch betätigtes Proportionsventil ist.

6. Gasentnahmeeinrichtung nach Anspruch 4 oder 5,
**dadurch gekennzeichnet,**
**daß** eine Ventilkammer (15) des Proportionalventils von einem Aktuatorbereich (8) des Proportionalventils durch eine gasundurchlässige Membrane (16) getrennt ist.

7. Gasentnahmeeinrichtung nach einem der Ansprüche 1 bis 3,
**dadurch gekennzeichnet,**
**daß** das Stellglied (3) ein Zweistellungsventil ist und daß der Regler eine impulsförmige Stellgröße abgibt.

8. Gasentnahmeeinrichtung nach wenigstens einem der vorangehenden Ansprüche,
**dadurch gekennzeichnet,**
**daß** mehrere Regler mit von diesen abgesetzten Anzeige- und Bedienorganen vorgesehen sind, daß jeweils einer der Regler einer Entnahmeleitung einer Gasart zugeordnet ist, und daß die Regler mit einer gemeinsamen Anzeige- und Bedieneinheit mit den Anzeige- und Bedienorganen sowie mit einer Umschalteinrichtung in Verbindung stehen, mit der zumindest ein Teil der Anzeige- und Bedienorgane auf einen der Regler umschaltbar ist.

9. Gasentnahmeeinrichtung nach Anspruch 8,
**dadurch gekennzeichnet,**
**daß** die Anzeigeorgane als ein Display ausgebildet sind.

10. Proportionalventil zum Einsatz in einer Entnahmeleitung für hochreine Gase,
**dadurch gekennzeichnet,**
**daß** eine Ventilkammer (15) des Proportionalventils von einem Aktuatorbereich (8) des Proportionalventils durch eine gasundurchlässige Membrane (16) getrennt ist.

11. Proportionalventil, mit einem unteren Ventilkörper (14), aus dem die Ventilkammer (15) ausgeformt ist, und einem oberen Ventilkörper (13), in dem ein Ventilschaft (9) verschiebbar gelagert ist, von dem ein Schließteil (10) in die Ventilkammer (15) hineinragt, nach Anspruch 10,
**dadurch gekennzeichnet,**
**daß** die Membrane (16) mit einem äußeren Rand zwischen dem oberen Ventilkörper (13) und dem unteren Ventilkörper (14) - gegebenenfalls mittelbar - gasdicht eingeklemmt ist und daß die Membrane (16) ein zentrales Loch aufweist, dessen Randbereich zwischen dem Ventilschaft (9) und dem Schließteil (10) gasdicht eingeklemmt ist.

12. Proportionalventil nach Anspruch 11
**dadurch gekennzeichnet,**
**daß** ein ringförmiges Dichtelement an einer Unterseite des oberen Ventilkörpers (13) auf eine in der Ventilkammer (15) verschiebbar gelagerte Hülse (18) drückt, die sich auf einen O-Ring (19) über einem Boden der Ventilkammer abstützt, und
**daß** die Membrane (16) mit einem äußeren Randbereich zwischen dem Dichtelement an dem oberen Ventilkörper (13) und der Hülse (18) gasdicht eingeklemmt ist.

13. Proportionalventil nach Anspruch 12,
**dadurch gekennzeichnet,**
**daß** das Dichtelement an dem oberen Ventilkörper (13) ein aus diesem ausgeformter ringförmiger Ansatz (17) ist.

14. Proportionalventil nach wenigstens einem der Ansprüche 10 bis 13,
**gekennzeichnet durch**
einen piezoelektrischen Aktuator.

15. Proportionalventil nach wenigstens einem der Ansprüche 10 bis 13,
**gekennzeichnet durch**
einen elektromagnetischen Aktuator.
